# EUROPEAN PATENT SPECIFICATION

(11) **EP 3 893 073 B1**
(45) Date of publication and mention of the grant of the patent: **28.02.2024**
(21) Application number: 20168864.5
(22) Date of filing: 09.04.2020
(51) Int. Cl.: G05D 1/00, H04L 67/12, H04W 4/02, H04W 4/40

(54) **METHOD AND APPARATUS FOR INVOKING A TELE-OPERATED DRIVING SESSION**
VERFAHREN UND VORRICHTUNG ZUM AUFRUFEN EINER FERNGESTEUERTEN FAHRSITZUNG
PROCÉDÉ ET APPAREIL PERMETTANT D'APPELER UNE SESSION DE CONDUITE TÉLÉCOMMANDÉE

(43) Date of publication of application: 13.10.2021
(73) Proprietor: VOLKSWAGEN AG, 38440 Wolfsburg (DE)
(72) Inventor: Jornod, Guillaume, 10245 Berlin (DE); Pfadler, Andreas, 13359 Berlin (DE)

(56) References cited:
- US-A1- 2017 192 423
- US-B1- 9 791 859

## Description

The present invention is related to a method, a computer program, and an apparatus for invoking a tele-operated driving session for a vehicle equipped with an automated driving function. The invention is further related to a vehicle equipped with an automated driving function, which makes use of such a method or apparatus.

Tele-operated driving is gathering more and more interest. Tele-operated driving in the present context means that an external operator controls a vehicle remotely. The external operator is located in a control center. There may be a large distance between the control center and the vehicle. The control center and the vehicle are connected via a radio communication system and its backhaul. Primarily, the radio communication system is part of a public mobile communication system such as LTE (Long Term Evolution) or 5G.

Tele-operated driving belongs to safety-related time-critical applications. Main requirements for the exchange of information are low latency, high data rate, and high reliability.

Autonomous driving, also referred to as automatic driving, automated driving, or piloted driving, is the movement of vehicles, mobile robots and driverless transport systems that are largely autonomous. There are different degrees of autonomous driving. In Europe, various transport ministries, for example the Federal Institute for Road Systems (Bundesanstalt für Straßenwesen) in Germany, have defined the following autonomous stages:
- Level 0: "Driver only", the driver drives himself, steers, accelerates, brakes, etc.
- Level 1: Certain assistance systems help with vehicle operation, including a cruise control system such as ACC (Automatic Cruise Control).
- Level 2: Partial automation. Therein, automatic parking, tracking function, general longitudinal guidance, acceleration, deceleration, etc. are taken over by the assistance systems, including collision avoidance.
- Level 3: High automation. The driver does not have to monitor the system continuously. The vehicle independently performs functions such as the triggering of the turn signal, lane change and tracking. The driver can turn to other things, but if requested, the driver has to take over control within a pre-warning period.
- Level 4: Full automation. The guidance of the vehicle is permanently performed by the system. If the system is no longer able to handle the tasks, the driver can be asked to take over control.
- Level 5: No driver required. Apart from setting the target and starting the system, no human intervention is required.

A slightly different definition of levels is known from the Society of Automotive Engineers (SAE). In this regard, reference is made to the SAE J3016 standard. Such definitions could also be used instead of the above given definition.

Tele-operated driving might become a key technology in order to solve issues with Level 4 and Level 5 driven vehicles. A vehicle driving autonomously makes its decisions based on the perception of its environment as well as on predefined traffic regulations. However, it may happen that an autonomous vehicle is no longer able to continue its planned route, e.g. due to an incorrect interpretation of the environment, sensor failures, poor road conditions, or unclear traffic conditions, e.g. an accident or a construction site. In such situations, the vehicle needs external instructions from someone else to solve the situation, e.g. the external operator located in the control center. The vehicle will be driven remotely by the external operator during a tele-operated driving session until the vehicle can resume its autonomous driving operation.

In this regard, US 2017/0308082 A1 discloses a method for assisting autonomous vehicles. While the vehicle is operating autonomously, it can alert a control center or open a dialogue with the control center if an event occurs. Events can include a variety of situations, including deadlock situations. Deadlock situations can occur when the autonomous vehicle software analysis reaches a threshold uncertainty level or a threshold risk level, or when there is a failure of autonomous control.

US 2019/0049948 A1 discloses methods for operating a vehicle by switching between an autonomous control system within the vehicle and a remote operator. When operating in full-autonomy, a vehicle operation system can check for a fail-operational condition. When such a condition is detected, the vehicle operation system can concurrently reduce the vehicle speed and send a distress call to a remote operator.

WO 2018/141415 A1 discloses a method for enabling remote control of a vehicle. The method is performed by a vehicle data provider. When the vehicle data provider detects a need for manual assistance by a remote operator, a stream of vehicle data relating to a time prior to when remote control starts is obtained. The vehicle data are modified by adjusting a duration of playback. The modified vehicle data are then provided for playback to the operator.

US 2017/0192423 A1 discloses a method for remotely assisting an autonomous vehicle. Sensor data from the autonomous vehicle is aggregated and an assistance-desired scenario is identified. Based on the sensor data, an assistance request is generated, which is transmitted to a remote assistance interface. A response to the assistance request is then received and processed.

US 9 791 859 B1 discloses a method for modifying flight parameters of a remotely piloted aircraft. The method includes analysing the quality of communication between the remotely piloted aircraft and the ground station, for instance by calculating the latency of the communication. After the analysis of the communication, the flight parameters of the aircraft can be modified.

It is known that the performance of tele-operated driving is related to the communication link performance. This link comprises the air interface between the vehicle and a base station and further the connection through the operator backbone, i.e. the core network. Notably, the driving parameters for tele-operated driving, like the maximum speed, have to be adapted to the communication quality with the command center. With present solutions for tele-operated driving, when a deadlock occurs, the vehicle needs to stop, contact the control center and start a tele-operated driving session. This creates an interruption of the driving experience. A smooth takeover is not possible yet.

It is an object of the present invention to provide improved solutions for invoking a tele-operated driving session for a vehicle.

This object is achieved by a method according to claim 1, by a computer program according to claim 9, which implements this method, and by an apparatus according to claim 10. The dependent claims include advantageous further developments and improvements of the present principles as described below.

According to a first aspect, a method implemented in a computing device of a vehicle equipped with an automated driving function for invoking a tele-operated driving session for the vehicle comprises the steps of:
- identifying an impending deadlock situation that may require a tele-operated driving session based on data obtained by sensors of the vehicle for observation of the environment or from sidelink communication from other vehicles;
- predicting a quality of service for a communication between the vehicle and a control center for a location where the tele-operated driving session should be performed; and
- reducing a speed of the vehicle to a maximum drivable speed for a tele-operated driving session with the predicted quality of service.

Accordingly, a computer program comprises instructions, which, when executed by at least one processor, cause the at least one processor to perform the following steps for invoking a tele-operated driving session for a vehicle equipped with an automated driving function:
- identifying an impending deadlock situation that may require a tele-operated driving session based on data obtained by sensors of the vehicle for observation of the environment or from sidelink communication from other vehicles;
- predicting a quality of service for a communication between the vehicle and a control center for a location where the tele-operated driving session should be performed; and
- reducing a speed of the vehicle to a maximum drivable speed for a tele-operated driving session with the predicted quality of service.

The term computer has to be understood broadly. In particular, it also includes electronic control units, embedded devices and other processor-based data processing devices.

The computer program code can, for example, be made available for electronic retrieval or stored on a computer-readable storage medium.

According to another aspect, an apparatus for invoking a tele-operated driving session for a vehicle equipped with an automated driving function comprises:
- an identifying module configured to identify an impending deadlock situation that may require a tele-operated driving session based on data obtained by sensors of the vehicle for observation of the environment or from sidelink communication from other vehicles;
- a predicting module configured to predict a quality of service for a communication between the vehicle and a control center for a location where the tele-operated driving session should be performed; and
- a speed control module configured to reduce a speed of the vehicle to a maximum drivable speed for a tele-operated driving session with the predicted quality of service.

According to the invention, the automated vehicle not only determines that a tele-operated driving session may be required in the near future due to a deadlock situation, but also predicts a quality of service for the communication link that will be used during this tele-operated driving session. Based on the given situation, especially the predicted quality of service, a maximum drivable speed is calculated for the tele-operated driving session. The speed of the automated vehicle is then reduced, if necessary, to this maximum drivable speed as a preparative action. Reducing the speed to the maximum drivable speed in advance avoids a potential emergency brake of the automated vehicle and thus leads to a smoother takeover.

In an advantageous embodiment, the tele-operated driving session is initiated once it is confirmed that the tele-operated driving session is required. As stated above, the automated vehicle reduces its speed to a maximum drivable speed in preparation of a situation that may require a tele-operated driving session. Of course, it may later turn out that in fact no tele-operated driving session is necessary. However, once it is confirmed that a tele-operated driving session is actually needed, the automated vehicles initiates this session. In this way, the control center is contacted sufficiently in advance to ensure a timely takeover of control by the control center.

In an advantageous embodiment, a probability is determined that a tele-operated driving session is required, wherein an impending deadlock situation that may require a tele-operated driving session is identified when the probability is above a first threshold. Under real operating conditions, it will often be difficult to make a definite decision at an early stage as to whether a tele-operated driving session will actually be required. Therefore, it is advisable to rely on probabilities. For example, the automated vehicle may continuously determine and evaluate the probability of a deadlock situation. Once this probability is sufficiently high, the necessary actions for handling the deadlock are initiated, i.e. the vehicle gathers information on the predicted quality of service and reduces the speed accordingly. Of course, information on the predicted quality of service may likewise be gathered continuously, irrespective of a deadlock situation. The value of the first threshold can be chosen such that a tradeoff is achieved between a smooth reduction of the vehicle speed and a number of unnecessary speed reductions. If the first threshold is set very low, the automated vehicle will reduce its speed in many situations where actually no tele-operated driving session is needed. If the first threshold is set very high, it may occur that the automated vehicle will need to brake rather sharply in order to achieve the maximum drivable speed in time. Determination of an appropriate value for the first threshold is at the discretion of the skilled person.

In an advantageous embodiment, it is confirmed that the tele-operated driving session is required when the probability is above a second threshold. Confirmation of the necessity of a tele-operated driving session based on the probability has the advantage that the control center can be contacted rather early, which increases the time available for an operator to take over control. The value of the second threshold can be chosen such that a tradeoff between a smooth handover to the control center and a number of unnecessarily invoked tele-operated driving sessions is achieved. As before, determination of an appropriate value for the second threshold is at the discretion of the skilled person. Of course, confirmation of the necessity of a tele-operated driving session can also be obtained through a user input, e.g. actuation of a press button by a driver.

In an advantageous embodiment, the probability is derived from data obtained by sensors of the vehicle for observation of the environment or from sidelink communication from other vehicles. For example, RADAR (Radio Detection and Ranging) sensors, LIDAR (Light Detection and Ranging) sensors, or cameras for 2D and 3D image acquisition may be used to determine a probability that a road is blocked. Alternatively or in addition, the automated vehicle may receive relevant information from other vehicles, e.g. from a vehicle closer to the potential deadlock situation or from a vehicle that is already being driven through the deadlock situation in a tele-operated driving session.

In an advantageous embodiment, the quality of service is predicted using previously determined data on a quality of service, data from sidelink communication from other vehicles, or environment data for the location where the tele-operated driving session should be performed. The previously determined data on a quality of service may be obtained, for example, from previous measurements of the vehicle or from data provided by a service provider. For example, the automated vehicle may already have gathered information on the quality of service of a communication link for a particular location during previous trips, or it may receive such information from other vehicles. Alternatively, a service provider may provide map data including such information. When the quality of service is predicted using environment data, these data preferably comprise information on buildings or locations of communication infrastructures. Based on such data, it can be analyzed whether for a particular location interferences caused by buildings are to be expected.

Advantageously, an autonomous or semi-autonomous vehicle comprises an apparatus according to the invention or is configured to perform a method according to the invention for invoking a tele-operated driving session. In this way, the vehicle shows an improved behavior when a tele-operated driving session needs to be invoked. The vehicle may be any type of vehicle, e.g. a cars, a bus, a motorcycle, a commercial vehicles, in particular a truck, an agricultural machinery, a construction machinery, a rail vehicle, etc. More generally, the invention can be used in land vehicles, rail vehicles, watercrafts, and aircrafts. This expressively includes robots and drones.

Further features of the present invention will become apparent from the following description and the appended claims in conjunction with the figures.
- Fig. 1: schematically illustrates a method for invoking a tele-operated driving session for a vehicle equipped with an automated driving function;
- Fig. 2: schematically illustrates a first embodiment of an apparatus for invoking a teleoperated driving session for a vehicle equipped with an automated driving function;
- Fig. 3: schematically illustrates a second embodiment of an apparatus for invoking a teleoperated driving session for a vehicle equipped with an automated driving function;
- Fig. 4: illustrates a basic architecture of a V2V and V2X communication system;
- Fig. 5: shows a block diagram of an electronics system of a vehicle;
- Fig. 6: shows an exemplary deadlock situation as an application scenario of tele-operated driving;
- Fig. 7: shows an estimated probability of a deadlock along a path of a vehicle equipped with an automated driving function;
- Fig. 8: shows a predicted quality of service of communication with a control center along a path of a vehicle equipped with an automated driving function; and
- Fig. 9: shows a comparison between speed profiles with and without the present solution.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

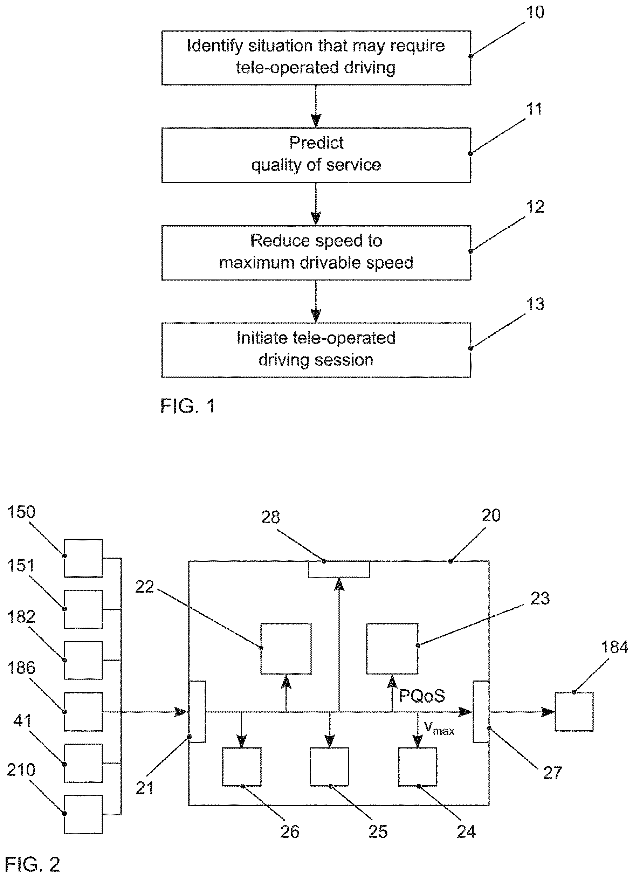

Fig. 1 schematically illustrates a method according to the invention implemented in a computing device of a vehicle equipped with an automated driving function for invoking a tele-operated driving session for the vehicle. In a first step, an impending deadlock situation that may require a tele-operated driving session is identified 10 based on data obtained by sensors of the vehicle for observation of the environment or from sidelink communication from other vehicles. For this purpose, a probability may be determined that a tele-operated driving session is required. An impending deadlock situation that may require a tele-operated driving session is then identified 10 when the probability is above a first threshold. The probability may be derived from data obtained by sensors of the vehicle or from a sidelink communication from other vehicles. In addition, a quality of service for a communication between the vehicle and a control center for a location where the tele-operated driving session should be performed is predicted 11. The quality of service may be predicted 11 using previously determined data on a quality of service, data from sidelink communication from other vehicles, or environment data for the location where the tele-operated driving session should be performed. The previously determined data on a quality of service may be obtained, for example, from previous measurements of the vehicle or from data provided by a service provider. The environment data preferably comprise information on buildings or locations of communication infrastructures. A speed of the vehicle is then reduced 12 a to a maximum drivable speed for a tele-operated driving session with the predicted quality of service. Once it is confirmed that the tele-operated driving session is required, the tele-operated driving session is initiated 13. For example, it may be confirmed that the tele-operated driving session is required when a probability that a tele-operated driving session is required is above a second threshold.

Fig. 2 schematically illustrates a block diagram of a first embodiment of an apparatus 20 according to the invention for invoking a tele-operated driving session for a vehicle equipped with an automated driving function. The apparatus 20 has an input 21 for receiving data, e.g. from sensors 150, 151, 182, 186 of the vehicle, from other vehicles 41 or from a base station 210. An identifying module 22 is configured to identify an impending deadlock situation that may require a tele-operated driving session based on the received data. For this purpose, the identifying module 22 may be configured to determine a probability that a tele-operated driving session is required. An impending deadlock situation that may require a tele-operated driving session is then identified when the probability is above a first threshold. Similarly, it may be confirmed that the tele-operated driving session is required when the probability is above a second threshold. The probability may be derived from data obtained by sensors of the vehicle or from a sidelink communication from other vehicles. The identifying module 22 may further be configured to initiate the tele-operated driving session once it is confirmed that the tele-operated driving session is required. A predicting module 23 predicts a quality of service PQoS for a communication between the vehicle and a control center for a location where the tele-operated driving session should be performed. For example, the predicting module 23 may be configured to predict the quality of service PQoS using previously determined data on a quality of service, data from sidelink communication from other vehicles, or environment data for the location where the tele-operated driving session should be performed. The previously determined data on a quality of service may be obtained, for example, from previous measurements of the vehicle or from data provided by a service provider. The environment data preferably comprise information on buildings or locations of communication infrastructures. A speed control module 24 then reduces a speed of the vehicle to a maximum drivable speed vₘₐₓ for a tele-operated driving session with the predicted quality of service PQoS. Control signals generated by the control module 24 or the identifying module 22 may be provided for further use to an automatic driving control unit 184 via an output 27. A local storage unit 26 is provided, e.g. for storing data during processing. The output 27 may also be combined with the input 21 into a single bidirectional interface.

The identifying module 22, the predicting module 23, and the speed control module 24 may be controlled by a controller 25. A user interface 28 may be provided for enabling a user to modify settings of the identifying module 22, the predicting module 23, the speed control module 24, or the controller 25. The identifying module 22, the predicting module 23, the speed control module 24, and the controller 25 can be embodied as dedicated hardware units. Of course, they may likewise be fully or partially combined into a single unit or implemented as software running on a processor, e.g. a CPU or a GPU.

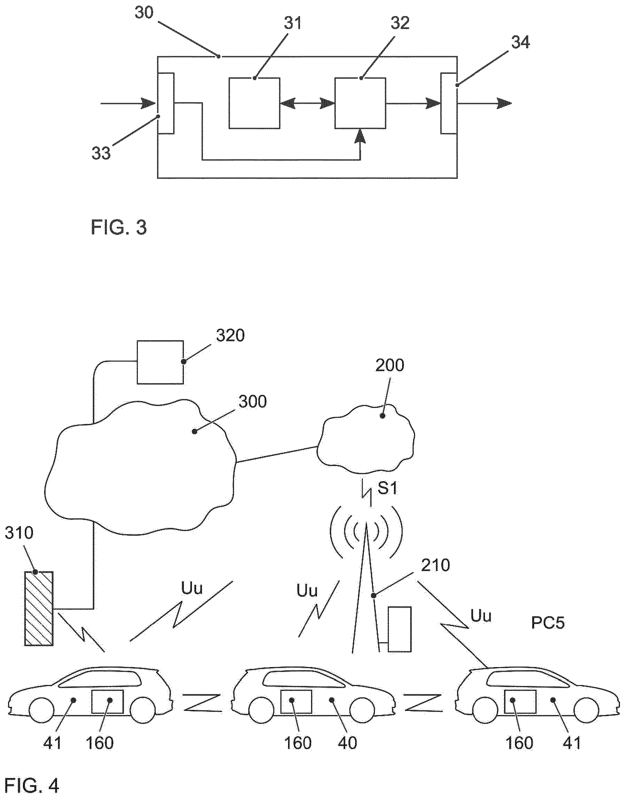

A block diagram of a second embodiment of an apparatus 30 according to the invention for invoking a tele-operated driving session for a vehicle equipped with an automated driving function is illustrated in Fig. 3. The apparatus 30 comprises a processing device 31 and a memory device 32. For example, the apparatus 30 may be a computer, an electronic control unit or an embedded system. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 26 and the memory device 32 may include volatile and/or non-volatile memory regions and storage devices such as hard disk drives, optical drives, and/or solid-state memories.

In the following, a preferred embodiment of the invention shall be explained in more detail with reference to Fig. 4 to Fig. 9.

Fig. 4 illustrates a basic architecture of a V2V (Vehicle-to-Vehicle) and V2X (Vehicle-to-Everything) communication system. Reference numeral 40 denotes a vehicle, which in this example is a car, in particular a passenger car. The vehicle 40 is equipped with an on-board connectivity module 160 including a corresponding antenna such that the vehicle 40 can participate in any form of mobile communication service. As shown in Fig. 4, the vehicle 40 may transmit and receive signals to and from a base station 210 of a mobile communication service provider using a V2N (Vehicle-to-Network) communication link Uu.

Such base station 210 may be an eNodeB (Evolved Node B) base station of an LTE mobile communication service provider or a gNB (Next Generation Node B) base station of a 5G mobile communication provider. The base station 210 and the corresponding equipment are part of a mobile communication network with a plurality of network cells, where each cell is served by one base station 210.

The base station 210 in Fig. 4 is positioned close to a main road, on which the vehicle 40 is driving. Of course, other vehicles 41 may also drive on the road. In the terminology of LTE, a mobile terminal corresponds to a user equipment, which allows a user to access network services, connecting to the UTRAN (UMTS (Universal Mobile Telecommunications System) Terrestrial Radio Access Network) or Evolved-UTRAN via the radio interface. Typically, such user equipment corresponds to a smart phone. Of course, mobile terminals are also used in the vehicles 40, 41 in the form of said on-board connectivity modules 160. These on-board connectivity modules 160 are LTE, 5G, or any other communication modules, which enable the vehicles 40, 41 to receive mobile data in downstream direction and to send such data in upstream or in direct device-to-device direction.

In terms of an LTE mobile communication system, the Evolved-UTRAN consists of a plurality of eNodeBs, providing the E-UTRA user plane protocol terminations, i.e. PDCP (Packet Data Convergence Protocol), RLC (Radio Link Control), MAC, (Medium Access Control), and PHY (Physical Layer), and the control plane protocol termination, i.e. RRC (Radio Resource Control) towards the user equipment. The eNodeBs are interconnected by means of the so-called X2 interface. The eNodeBs are also connected by means of the so-called S1 interface to an EPC (Evolved Packet Core) 200, more specifically to an MME (Mobility Management Entity) by means of an S1-MME interface and to a serving gateway by means of an S1-U interface.

In relation to this general architecture, Fig. 4 shows that the eNodeB is connected to the EPC 200 via the S1 interface and that EPC 200 is connected to the Internet 300. The control center computer 320, to which the vehicles 40, 41 send messages and from which the vehicles 40, 41 receive messages, is also connected to the Internet 300. In the field of cooperative and automated driving, the control center computer 320 typically is located in a traffic control center, where the operators for the tele-operated driving sessions requested by the vehicles 40, 41 are working. Finally, also an infrastructure network component is shown, in this case a roadside unit 310. For the ease of implementation, it is considered that all components have assigned an Internet address, typically in the form of an IPv6 address, such that the packets transporting messages between the components can be routed accordingly.

The various interfaces of the LTE network architecture are standardized. In this regard, reference is made to the various LTE specifications, which are publicly available for the sake of sufficiently disclosing further implementation details.

The vehicles 40, 41 may also be equipped with means for observing their surroundings. Their sensor systems, which are used to capture the environmental objects, are based on different measuring methods, depending on the application. Widespread technologies are, among others, RADAR, LIDAR, cameras for 2D and 3D image acquisition, and ultrasonic sensors.

Since automated driving is on the rise, a lot more data needs to be exchanged among the vehicles 40, 41, e.g. using V2V communication links PC5, and also between the vehicles 40, 41 and the network. The communication systems for V2V and V2X communication need to be adapted correspondingly. The 3GPP standard setting organization has been and is releasing features for the new generation of the 5G cellular mobile communication system, including V2X features. A large panel of vehicular use cases have been designed, ranging from infotainment to cooperative driving. Depending on the application, the requirement on the access link Uu in the scope of V2N communication drastically changes. When it comes to safety-related time-critical applications such as tele-operated driving, in which a command center takes over certain driving functions of the vehicle, these requirements are the exchange of information with low latency, high data rate and high reliability.

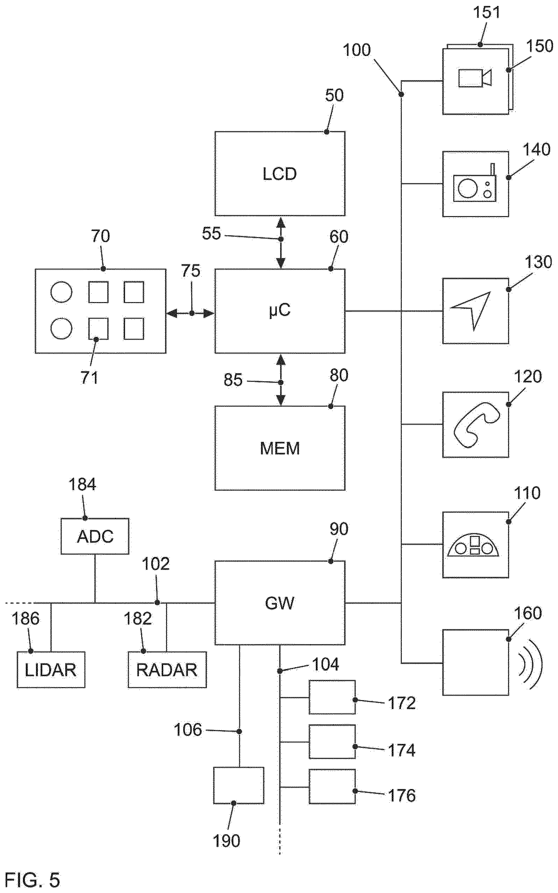

Fig. 5 schematically shows a block diagram of a board electronics system of a vehicle. Part of the board electronics system is an infotainment system, which comprises a touch-sensitive display unit 50, a computing device 60, an input unit 70, and a memory device 80. The display unit 50 is connected to the computing device 60 via a data line 55 and includes both a display area for displaying variable graphical information and an operator interface (touch-sensitive layer) arranged above the display area for inputting commands by a user. The input unit 70 is connected to the computing device 60 via a data line 75. Reference numeral 71 designates a press button that allows a driver to manually request a tele-operated driving session if the vehicle is blocked and the driver wants the support of a tele-operated driving operator to find a way out of the blocking situation. There is no need for a dedicated press button 71 if other techniques for manual control are used. This includes selecting an option in a user menu displayed on the display unit 50, detecting the command with speech recognition, or using gesture control means.

The memory device 80 is connected to the computing device 60 via a data line 85. In the memory device 80, a pictogram directory and/or symbol directory is deposited with pictograms and/or symbols for possible overlays of additional information.

The other parts of the infotainment system, such as a camera 150, radio 140, navigation device 130, telephone 120 and instrument cluster 110 are connected via a data bus 100 with the computing device 60. As data bus 100, the high-speed variant of the CAN (Controller Area Network) bus according to ISO standard 11898-2 may be used. Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 160. It can be used for mobile communication, e.g. mobile communication according to the 5G standard.

Reference numeral 172 denotes an engine control unit. Reference numeral 174 denotes an ESC (electronic stability control) unit, whereas reference numeral 176 denotes a transmission control unit. The networking of such control units, all of which are allocated to the category of the drive train, typically occurs with a CAN bus 104. Since various sensors are installed in the motor vehicle and these are no longer only connected to individual control units, such sensor data are also distributed via the bus system 104 to the individual control devices.

Modern vehicles may comprise additional components, such as further sensors for scanning the surroundings, like a LIDAR sensor 186 or a RADAR sensor 182 and additional video cameras 151, e.g. a front camera, a rear camera or side cameras. Such sensors are increasingly used in vehicles for observation of the environment. Further control devices, such as an ADC (automatic driving control) unit 184, etc., may be provided in the vehicle. The RADAR and LIDAR sensors 182, 186 may have a scanning range of up to 250 m, whereas the cameras 150, 151 may cover a range from 30 m to 120 m. The components 182 to 186 are connected to another communication bus 102, e.g. an Ethernet-Bus due to its higher bandwidth for data transport. One Ethernet-bus adapted to the special needs of car communication is standardized in the IEEE 802.1Q specification. Moreover, a lot of information about the environment may be received via V2V communication from other vehicles. Particularly for those vehicles that are not in line of sight to the observing vehicle, it is very advantageous to receive the information about their position and motion via V2V communication.

Reference numeral 190 denotes an on-board diagnosis interface, which is connected to another communication bus 106.

For the purpose of transmitting the vehicle-relevant sensor data via the an on-board connectivity module 160 to another vehicle or to a control center computer, a gateway 90 is provided. This gateway 90 is connected to the different bus systems 100, 102, 104 and 106. The gateway 90 is adapted to convert the data it receives via one bus to the transmission format of another bus so that it can be distributed using the packets specified for the respective other bus. For forwarding this data to the outside, i.e. to another vehicle or to the control central computer, the an on-board connectivity module 160 is equipped with a communication interface to receive these data packets and, in turn, to convert them into the transmission format of the appropriate mobile radio standard.

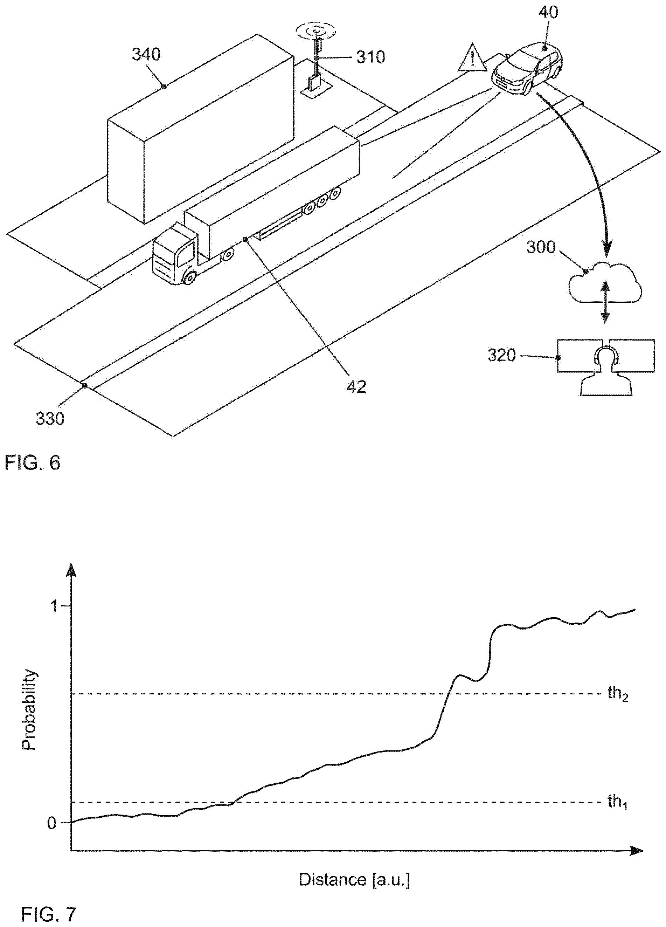

Fig. 6 shows an exemplary deadlock situation as an application scenario of tele-operated driving. A truck 42 is blocking a one-way road. The succeeding vehicle 40 is an automated vehicle with Level 4 or Level 5 automated driving capability in the need to pass this obstacle. The automated driving functionality needs to respect all the traffic regulations, including traffic signs and traffic lights, etc. Since it is not an option for the automated driving function to drive over the sidewalk 330 in order to pass the truck 42, the vehicle 40 would remain behind the truck 42 and wait until the truck 42 moves on. This, however, could take hours, e.g. if the truck 42 is stopping inadvertently due to a breakdown or a road accident. To overcome this deadlock situation, the vehicle 40 needs to drive over the sidewalk 330 to continue its planed route. To this end, a tele-operated driving session needs to be invoked at a control center computer 320 using a connection via a roadside unit 310 and the Internet 300. According to present solutions for tele-operated driving, the vehicle 40 would stop, contact the control center and then reach the maximum drivable speed in consideration of the situation and information on the quality of service for communication during the tele-operated driving session. As can be seen, a building 340 constitutes an obstacle for the communication with the roadside unit 310, i.e. the quality of service will be negatively affected by this building 340.

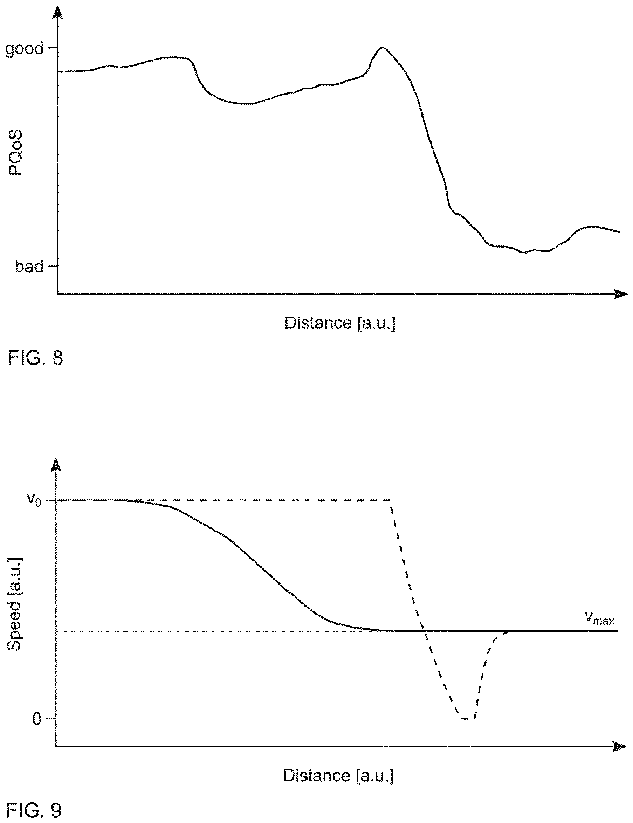

In contrast, according to the present solution, when the automated vehicle 40 approaches the deadlock situation, it first identifies an impending situation that may require a tele-operated driving session. For this purpose, the automated vehicle 40 may continuously determine and evaluate a probability of a deadlock along its path. Such an estimated probability of a deadlock for the situation of Fig. 6 is shown schematically in the graph in Fig. 7. As can be seen, the probability increases along the path. When the probability of a deadlock exceeds a first threshold th₁, the automated vehicle 40 further gathers information on a predicted quality of service PQoS for a communication between the vehicle 40 and the control center. Of course, the predicted quality of service PQoS may likewise be determined continuously, irrespective of any probability of a deadlock. The predicted quality of service PQoS for the situation of Fig. 6 is shown schematically in the graph in Fig. 8. As can be seen, there is a drop in the predicted quality of service PQoS due to the presence of the building 340. As the drop in the predicted quality of service PQoS coincides with the increase of the probability of a deadlock, the automated vehicle 40 changes its driving settings to target the maximum drivable speed vₘₐₓ in a tele-operated driving session in this environment. Additionally, the automated vehicle 40 prepares the tele-operated driving session as soon as it is confirmed that the deadlock will occur, e.g. because the probability of a deadlock is above a second threshold th₂. Reducing the speed to the maximum drivable speed vₘₐₓ for a tele-operated driving session and initiating the tele-operated driving session in advance avoids the emergency brake and waiting time that would occur without the present solution. A comparison between a speed profile with the present solution (solid line) and a speed profile without the present solution (dashed line) is shown in Fig. 9. The initial speed of the vehicle as it approaches the deadlock situation is v₀.

### Reference numerals

- 10: Identify situation that may require tele-operated driving
- 11: Predict quality of service
- 12: Reduce speed to maximum drivable speed
- 13: Initiate tele-operated driving session
- 20: Apparatus
- 21: Input
- 22: Identifying module
- 23: Predicting module
- 24: Speed control module
- 25: Controller
- 26: Local storage unit
- 27: Output
- 28: User interface
- 30: Apparatus
- 31: Processing device
- 32: Memory device
- 33: Input
- 34: Output
- 40: Vehicle
- 41: Other vehicle
- 42: Truck
- 50: Display Unit
- 55: Data line to display unit
- 60: Computing device
- 70: Input unit
- 71: Press button
- 75: Data line to input unit
- 80: Memory unit
- 85: Data line to memory unit
- 90: Gateway
- 100: First data bus
- 102: Second data bus
- 104: Third data bus
- 106: Fourth data bus
- 110: Instrument cluster
- 120: Telephone
- 130: Navigation device
- 140: Radio
- 150: Camera
- 151: Further cameras
- 160: On-board connectivity module
- 172: Engine control unit
- 174: Electronic stability control unit
- 176: Transmission control unit
- 182: RADAR sensor
- 184: Automatic driving control unit
- 186: LIDAR sensor
- 190: On-board diagnosis interface
- 200: Evolved packet core
- 210: Base station
- 300: Internet
- 310: Roadside unit
- 320: Control center computer
- 330: Sidewalk
- 340: Building
- PC5: V2V communication link
- PQoS: Predicted quality of service
- S1: S1 interface
- Uu: V2N communication link

## Claims

1. A method implemented in a computing device (60) of a vehicle (40) equipped with an automated driving function for invoking a tele-operated driving session for the vehicle (40), the method being **characterized by** the following steps:
- identifying (10) an impending deadlock situation that may require a tele-operated driving session based on data obtained by sensors (150, 151, 182, 186) of the vehicle (40) for observation of the environment or from sidelink communication from other vehicles (41);
- predicting (11) a quality of service (PQoS) for a communication between the vehicle (40) and a control center for a location where the tele-operated driving session should be performed; and
- reducing (12) a speed of the vehicle (40) to a maximum drivable speed for a tele-operated driving session with the predicted quality of service (PQoS).

2. The method according to claim 1, further comprising initiating (13) the tele-operated driving session once it is confirmed that the tele-operated driving session is required.

3. The method according to claim 1 or 2, further comprising determining (10) a probability that a tele-operated driving session is required, wherein an impending deadlock situation that may require a tele-operated driving session is identified (10) when the probability is above a first threshold.

4. The method according to claim 3, wherein it is confirmed that the tele-operated driving session is required when the probability is above a second threshold.

5. The method according to claim 3 or 4, wherein the probability is derived from data obtained by sensors (150, 151, 182, 186) of the vehicle (40) for observation of the environment or from sidelink communication from other vehicles (41).

6. The method according to any of the preceding claims, wherein the quality of service (PQoS) is predicted using previously determined data on a quality of service, data from sidelink communication from other vehicles (41), or environment data for the location where the tele-operated driving session should be performed.

7. The method according to claim 6, wherein the previously determined data on a quality of service are obtained from previous measurements of the vehicle (40) or from data provided by a service provider.

8. The method according to claim 6 or 7, wherein the environment data comprise information on buildings or locations of communication infrastructures.

9. A computer program comprising instructions, which, when executed by a computer, cause the computer to perform a method according to any of claims 1 to 8 for invoking a tele-operated driving session for a vehicle (40) equipped with an automated driving function.

10. An apparatus (20) for invoking a tele-operated driving session for a vehicle (40) equipped with an automated driving function, the apparatus (20) being **characterized in that** it comprises:
- an identifying module (22) configured to identify (10) an impending deadlock situation that may require a tele-operated driving session based on data obtained by sensors (150, 151, 182, 186) of the vehicle (40) for observation of the environment or from sidelink communication from other vehicles (41);
- a predicting module (23) configured to predict (11) a quality of service (PQoS) for a communication between the vehicle (40) and a control center for a location where the tele-operated driving session should be performed; and
- a speed control module (24) configured to reduce (12) a speed of the vehicle (40) to a maximum drivable speed for a tele-operated driving session with the predicted quality of service (PQoS).

11. A vehicle (40) equipped with an automated driving function, **characterized in that** the vehicle (40) comprises an apparatus (20) according to claim 10 or is configured to perform a method according to any of claims 1 to 8 for invoking a tele-operated driving session.

## Patentansprüche

1. Verfahren zum Aufrufen einer ferngesteuerten Fahrsitzung, das in eine Rechenvorrichtung (60) eines Fahrzeugs (40) implementiert wird, das mit einer automatisierten Fahrfunktion für das Fahrzeug (40) ausgestattet ist, wobei das Verfahren **gekennzeichnet ist durch** die folgenden Schritte:
- Identifizieren (10) einer bevorstehenden Deadlock-Situation, die eine ferngesteuerte Fahrsitzung erfordern kann, basierend auf Daten, die durch Sensoren (150, 151, 182, 186) des Fahrzeugs (40) für eine Beobachtung der Umgebung oder von Sidelink-Kommunikation von anderen Fahrzeugen (41) erhalten werden;
- Vorhersagen (11) einer Dienstgüte (PQoS) für eine Kommunikation zwischen dem Fahrzeug (40) und einer Leitstelle für eine Position, an der die ferngesteuerte Fahrsitzung durchgeführt werden soll; und
- Reduzieren (12) einer Geschwindigkeit des Fahrzeugs (40) auf eine maximal fahrbare Geschwindigkeit für eine ferngesteuerte Fahrsitzung mit der vorhergesagten Dienstgüte (PQoS).

2. Verfahren nach Anspruch 1, ferner umfassend ein Initiieren (13) der ferngesteuerten Fahrsitzung, sobald bestätigt wird, dass die ferngesteuerte Fahrsitzung erforderlich ist.

3. Verfahren nach Anspruch 1 oder 2, ferner umfassend ein Bestimmen (10) einer Wahrscheinlichkeit, dass eine ferngesteuerte Fahrsitzung erforderlich ist, wobei eine bevorstehende Deadlock-Situation, die eine ferngesteuerte Fahrsitzung erfordern kann, identifiziert (10) wird, wenn die Wahrscheinlichkeit über einem ersten Schwellenwert liegt.

4. Verfahren nach Anspruch 3, wobei bestätigt wird, dass die ferngesteuerte Fahrsitzung erforderlich ist, wenn die Wahrscheinlichkeit über einem zweiten Schwellenwert liegt.

5. Verfahren nach Anspruch 3 oder 4, wobei die Wahrscheinlichkeit von Daten abgeleitet wird, die durch Sensoren (150, 151, 182, 186) des Fahrzeugs (40) für die Beobachtung der Umgebung oder von Sidelink-Kommunikation von anderen Fahrzeugen (41) erhalten werden.

6. Verfahren nach einem der vorstehenden Ansprüche, wobei die Dienstgüte (PQoS) unter Verwendung vorher bestimmter Daten zu einer Dienstgüte, Daten von Sidelink-Kommunikation von anderen Fahrzeugen (41) oder Umgebungsdaten für die Position, an der die ferngesteuerte Fahrsitzung durchgeführt werden soll, vorhergesagt wird.

7. Verfahren nach Anspruch 6, wobei die vorher bestimmten Daten zu einer Dienstgüte von vorherigen Messungen des Fahrzeugs (40) oder von Daten erhalten werden, die durch einen Dienstanbieter bereitgestellt werden.

8. Verfahren nach Anspruch 6 oder 7, wobei die Umgebungsdaten Informationen zu Gebäuden oder Positionen von Kommunikationsinfrastrukturen umfassen.

9. Computerprogramm, umfassend Anweisungen, die, wenn sie durch einen Computer ausgeführt werden, den Computer veranlassen, ein Verfahren nach einem der Ansprüche 1 bis 8 zum Aufrufen einer ferngesteuerten Fahrsitzung für ein Fahrzeug (40) durchzuführen, das mit einer automatisierten Fahrfunktion ausgestattet ist.

10. Einrichtung (20) zum Aufrufen einer ferngesteuerten Fahrsitzung für ein Fahrzeug (40), das mit einer automatisierten Fahrfunktion ausgestattet ist, wobei die Einrichtung (20) **dadurch gekennzeichnet ist, dass** sie umfasst:
- ein Identifizierungsmodul (22), das konfiguriert ist, um eine bevorstehende Deadlock-Situation, die eine ferngesteuerte Fahrsitzung erfordern kann, basierend auf Daten, die durch Sensoren (150, 151, 182, 186) des Fahrzeugs (40) für die Beobachtung der Umgebung oder von Sidelink-Kommunikation von anderen Fahrzeugen (41) erhalten werden, zu identifizieren (10);
- ein Vorhersagemodul (23), das konfiguriert ist, um eine Dienstgüte (PQoS) für eine Kommunikation zwischen dem Fahrzeug (40) und einer Leitstelle für eine Position, an der die ferngesteuerte Fahrsitzung durchgeführt werden soll, vorherzusagen (11); und
- ein Geschwindigkeitssteuermodul (24), das konfiguriert ist, um eine Geschwindigkeit des Fahrzeugs (40) auf eine maximal fahrbare Geschwindigkeit für eine ferngesteuerte Fahrsitzung mit der vorhergesagten Dienstgüte (PQoS) zu reduzieren (12).

11. Fahrzeug (40), das mit einer automatisierten Fahrfunktion ausgestattet ist, **dadurch gekennzeichnet, dass** das Fahrzeug (40) eine Einrichtung (20) nach Anspruch 10 umfasst oder konfiguriert ist, um ein Verfahren nach einem der Ansprüche 1 bis 8 zum Aufrufen einer ferngesteuerten Fahrsitzung durchzuführen.

## Revendications

1. Procédé mis en oeuvre dans un dispositif informatique (60) d'un véhicule (40) équipé d'une fonction de conduite automatisée pour invoquer une session de conduite téléopérée pour le véhicule (40), le procédé étant **caractérisé par** les étapes suivantes :
- l'identification (10) d'une situation de blocage imminente qui peut nécessiter une session de conduite téléopérée sur la base de données obtenues par des capteurs (150, 151, 182, 186) du véhicule (40) pour l'observation de l'environnement ou à partir d'une communication de liaison latérale provenant d'autres véhicules (41) ;
- la prédiction (11) d'une qualité de service (PQoS) pour une communication entre le véhicule (40) et un centre de commande pour un emplacement où la session de conduite téléopérée doit être effectuée ; et
- la réduction (12) d'une vitesse du véhicule (40) à une vitesse de conduite maximale pour une session de conduite téléopérée avec la qualité de service prédite (PQoS).

2. Procédé selon la revendication 1, comprenant en outre l'initiation (13) de la session de conduite téléopérée une fois qu'il est confirmé que la session de conduite téléopérée est requise.

3. Procédé selon la revendication 1 ou 2, comprenant en outre la détermination (10) d'une probabilité qu'une session de conduite téléopérée soit requise, dans lequel une situation de blocage imminente qui peut nécessiter une session de conduite téléopérée est identifiée (10) lorsque la probabilité est supérieure à un premier seuil.

4. Procédé selon la revendication 3, dans lequel il est confirmé que la session de conduite téléopérée est requise lorsque la probabilité est supérieure à un second seuil.

5. Procédé selon la revendication 3 ou 4, dans lequel la probabilité est dérivée de données obtenues par des capteurs (150, 151, 182, 186) du véhicule (40) pour l'observation de l'environnement ou à partir d'une communication de liaison latérale provenant d'autres véhicules (41).

6. Procédé selon l'une quelconque des revendications précédentes, dans lequel la qualité de service (PQoS) est prédite à l'aide de données préalablement déterminées sur une qualité de service, de données à partir d'une communication de liaison latérale provenant d'autres véhicules (41), ou de données d'environnement pour l'emplacement où la session de conduite téléopérée doit être effectuée.

7. Procédé selon la revendication 6, dans lequel les données préalablement déterminées sur une qualité de service sont obtenues à partir de mesures précédentes du véhicule (40) ou à partir de données fournies par un fournisseur de services.

8. Procédé selon la revendication 6 ou 7, dans lequel les données d'environnement comprennent des informations sur des bâtiments ou des emplacements d'infrastructures de communication.

9. Programme informatique comprenant des instructions qui, lorsqu'elles sont exécutées par un ordinateur, amènent l'ordinateur à effectuer un procédé selon l'une quelconque des revendications 1 à 8 pour invoquer une session de conduite téléopérée pour un véhicule (40) équipé d'une fonction de conduite automatisée.

10. Appareil (20) destiné à invoquer une session de conduite téléopérée pour un véhicule (40) équipé d'une fonction de conduite automatisée, l'appareil (20) étant **caractérisé en ce qu'**il comprend :
- un module d'identification (22) configuré pour identifier (10) une situation de blocage imminente qui peut nécessiter une session de conduite téléopérée sur la base de données obtenues par des capteurs (150, 151, 182, 186) du véhicule (40) pour l'observation de l'environnement ou à partir d'une communication de liaison latérale provenant d'autres véhicules (41) ;
- un module de prédiction (23) configuré pour prédire (11) une qualité de service (PQoS) pour une communication entre le véhicule (40) et un centre de commande pour un emplacement où la session de conduite téléopérée doit être effectuée ; et
- un module de commande de vitesse (24) configuré pour réduire (12) une vitesse du véhicule (40) à une vitesse de conduite maximale pour une session de conduite téléopérée avec la qualité de service prédite (PQoS).

11. Véhicule (40) équipé d'une fonction de conduite automatisée, **caractérisé en ce que** le véhicule (40) comprend un appareil (20) selon la revendication 10 ou est configuré pour effectuer un procédé selon l'une quelconque des revendications 1 à 8 pour invoquer une session de conduite téléopérée.
